# EUROPEAN PATENT SPECIFICATION

(11) **EP 2 923 586 B1**
(45) Date of publication and mention of the grant of the patent: **01.02.2017**
(21) Application number: 14162070.8
(22) Date of filing: 27.03.2014
(51) Int. Cl.: A23N 15/02, B26D 3/26

(54) **Strawberry cutting machine**
Erdbeerschneidmaschine
Machine de coupe de la fraise

(43) Date of publication of application: 30.09.2015
(73) Proprietor: Seditec S.A., 41110 Sevilla (ES)
(72) Inventor: Castillejo Fernandez, Javier, 41110 Sevilla (ES); Castillejo Fernandez, Gabriel, 41110 Sevilla (ES)
(74) Representative: Pons

(56) References cited:
- GB-A- 736 721
- US-A- 3 978 237
- US-A- 4 122 766
- US-A- 5 590 591
- US-A- 5 865 111

## Description

### OBJECT OF THE INVENTION

The present invention relates to a strawberry cutting machine that hulls strawberries for the subsequent use of the remaining fruit, either for making jam, compote or for plain consumption.

The object of the invention is a strawberry cutting machine which properly and automatically removes the calyx from strawberries regardless of strawberry size.

### BACKGROUND OF THE INVENTION

The prior art has disclosed strawberry cutting machines that can hull strawberries for the subsequent use of the remaining fruit, either for making jam, compote or for plain consumption.

Existing machines include those having a drum with various spaces for the strawberries, so that once the strawberries are arranged in the different spaces, a blade cuts off the calyces of the different strawberries.

The disadvantage of the prior machine is that strawberries may be placed in different positions within the spaces so calyces are often cut transversally, wasting part of the edible portion of the strawberry while part of the calyx remains uncut, thus reducing the quality of jam or compote if this were the ultimate use of the strawberry.

Other known machines include those that grip the strawberry by clamping the sepal with rollers and a blade then cuts the calyx. With this machine, strawberries without a sepal at the time of cutting cannot be clamped, so the calyx cannot be removed.

From US 5,590591 A an apparatus is known in which strawberries are oriented by gripping with a vacuum device, and are held in cup shaped baskets for cutting off the calyx.

The machine of the present invention can solve all the above drawbacks as it cuts the strawberry calyx regardless of the initial orientation of the strawberry and perpendicularly to the generatrix.

### DESCRIPTION OF THE INVENTION

The present invention relates to a strawberry cutting machine which properly and automatically removes the calyx from strawberries regardless of strawberry size.

The machine comprises a receiving hopper for whole strawberries, which the bulk strawberries are fed into, wherein the receiving hopper comprises a metering plate that measures out the strawberries one by one to a set of receiving cradles.

Each receiving cradle comprises two positioning rollers which collect a strawberry from the receiving hopper and wherein at least one of the two rollers is rotatable about its axis in order to place the strawberry in a pre-calyx cutting position or in a calyx cutting position, and at least one folding paddle that fixes the position of the strawberry in the receiving cradle in the pre-calyx cutting position or in a calyx cutting position.

The positioning rollers comprise a generatrix comprising a concave area. This concave area allows the arrangement of the central part of the strawberry on said area during the rotation of at least one of the positioning rollers.

Optionally, the strawberry cutting machine further comprises displacement means to move the strawberries within the receiving cradles from the pre-calyx cutting position to the calyx cutting position.

The strawberry cutting machine further comprises transversal cutting means that cut the strawberry calyx in a calyx cutting position and means for collecting the hulled strawberries.

Optionally, the displacement means further comprise longitudinal cutting means in order to cut the strawberry into two halves along a longitudinal plane thereof.

In summary, the invention relates to a strawberry cutting machine comprising a receiving hopper of whole strawberries, transversal cutting means which cut strawberry calyx in a calyx cutting position, a set of receiving cradles, wherein each receiving cradle is configured to receive one strawberry, and comprises:
- two positioning rollers, wherein at least one of the two positioning rollers is rotatable around its axis to position the strawberry in a pre-calyx cutting position or in a calyx cutting position and
- at least one folding paddle which fixes the position of the strawberry within the receiving cradle in the pre-calyx cutting position or in the calyx cutting position.

### DESCRIPTION OF THE DRAWINGS

To supplement the description being made and for the sake of a better understanding of the characteristics of the invention, according to a preferred practical embodiment thereof, attached as an integral part of said description, is a set of drawings wherein for the purpose of illustration and without limiting the scope of the invention, the following is shown:

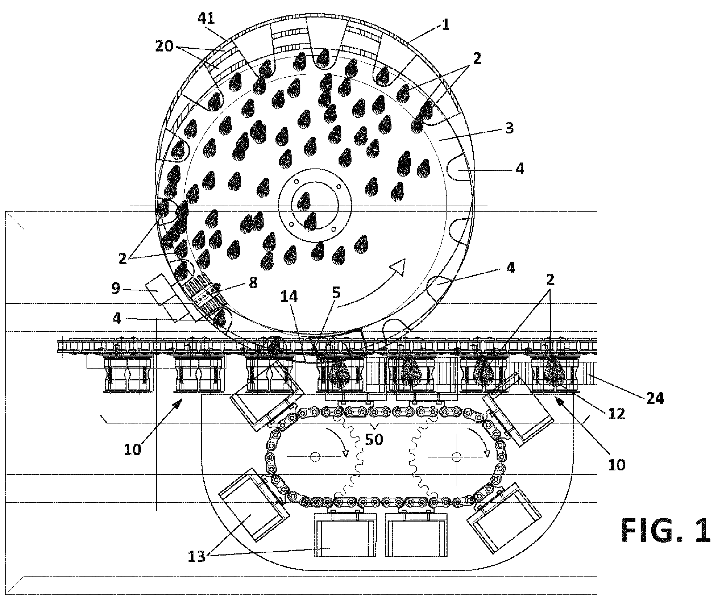

Figure 1 -. Shows a plan view of the strawberry receiving hopper, the first set of receiving cradles and the movable hoppers of the strawberry cutting machine of the present invention.

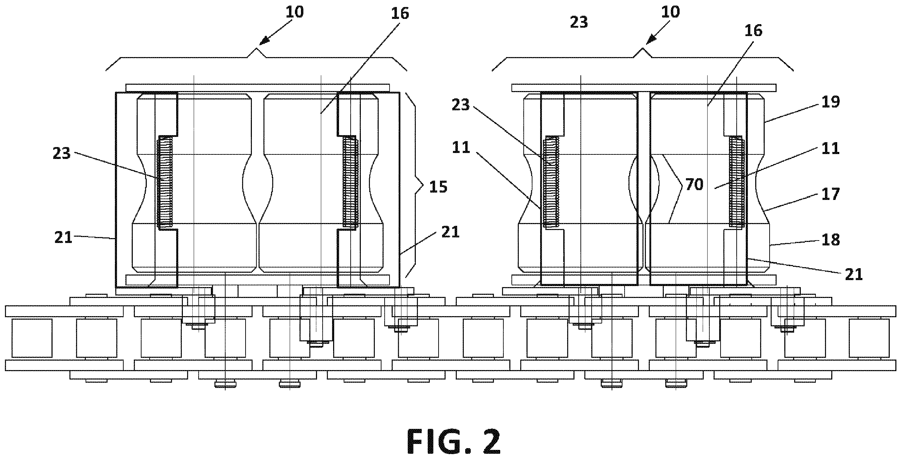

Figure 2 -. Shows a plan view of a receiving cradle of the strawberry cutting machine of the present invention with the folding paddles in the open position on the left and a receiving cradle with the folding paddles in the closed position on the right.

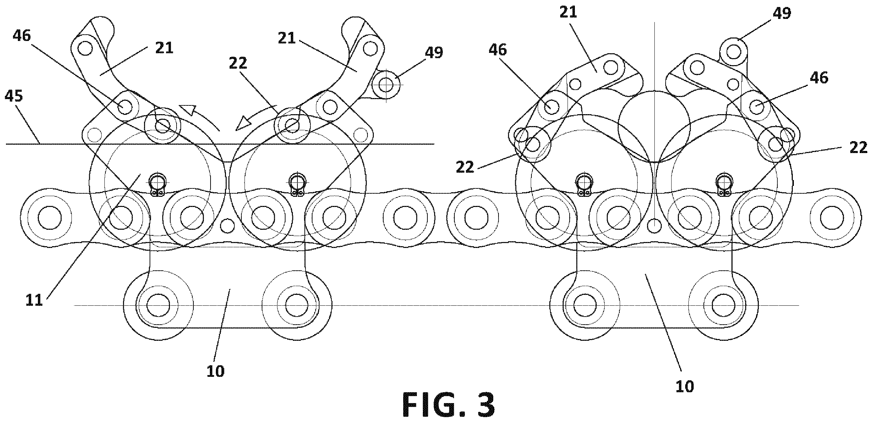

Figure 3 -. Shows an elevation view of Figure 2.

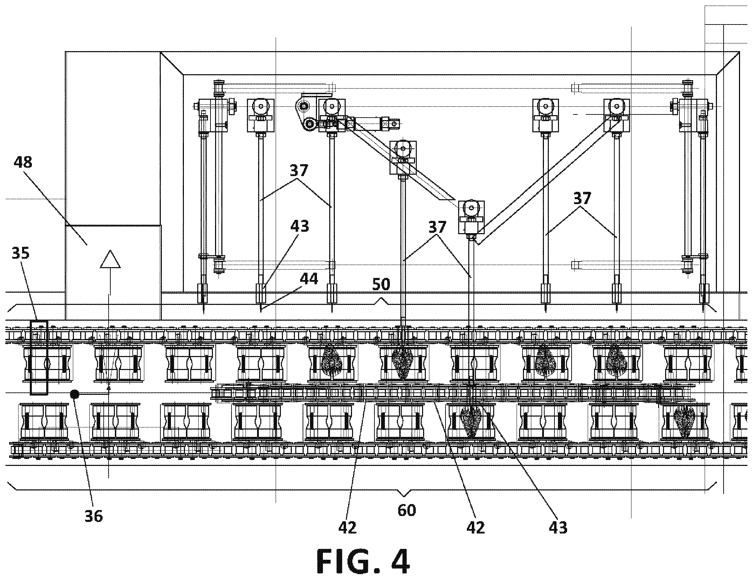

Figure 4 -. Shows a plan view of the strawberry relocation means which move the strawberries out of the movable receiving cradles of the first set of cradles and deposit them in the second set of cradles.

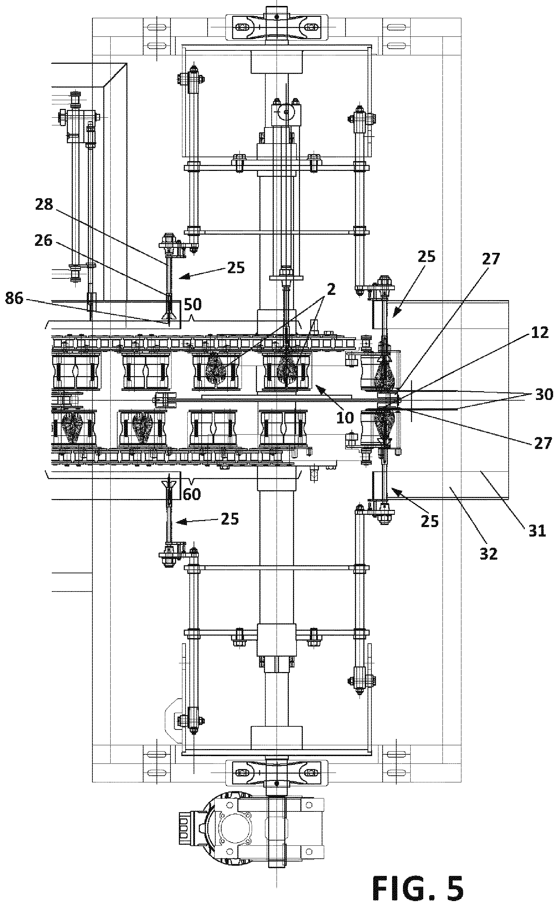

Figure 5 -. Shows a plan view of the displacement means which move the strawberries inside the movable receiving cradles from the pre-calyx cutting position to the calyx cutting position, and of the transversal cutting means.

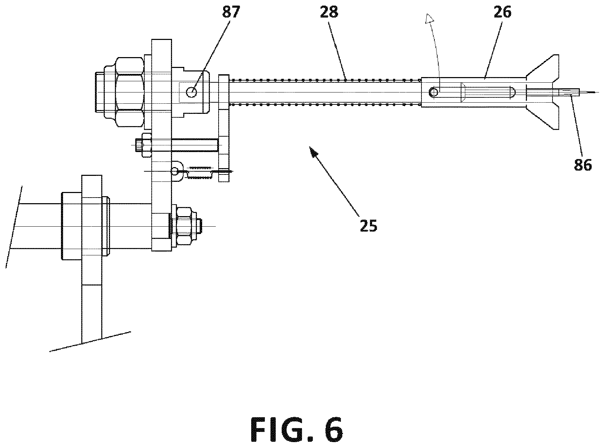

Figure 6 -. Shows a detailed view of the movable pusher of the displacement means which move the strawberries within the receiving cradles from the pre-calyx cutting position to the calyx cutting position in a first embodiment.

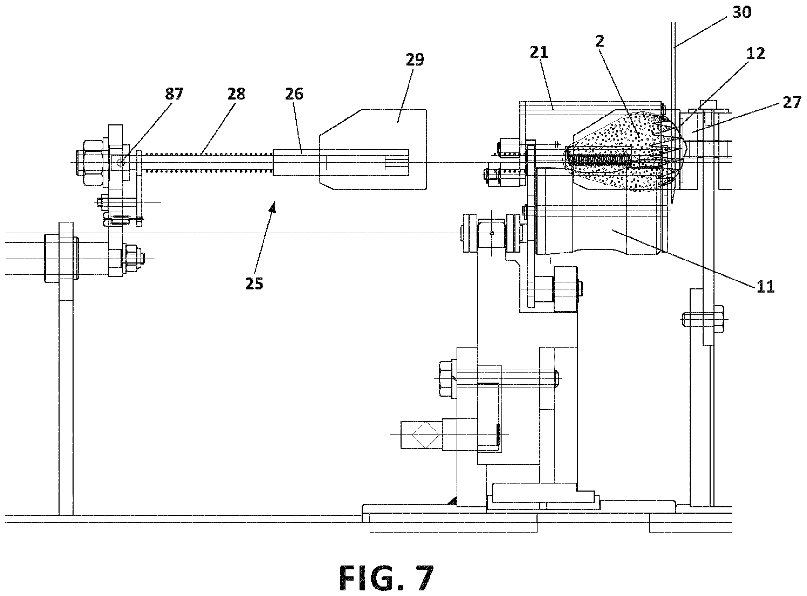

Figure 7 -. Shows a detailed view of the movable pusher of the displacement means which move the strawberries within the receiving cradles from the pre-calyx cutting position to the calyx cutting position in a second embodiment, wherein the displacement means further comprise means for the longitudinal cutting of the strawberry.

### PREFERRED EMBODIMENT OF THE INVENTION

According to a preferred embodiment of the invention, the strawberry cutting machine comprises a receiving hopper (1) of whole strawberries (2), which bulk strawberries (2) are fed into, wherein the receiving hopper (1) comprises a metering plate (3) to measure out the strawberries (2) one by one to a first set (50) of movable receiving cradles (10).

The receiving hopper (1) is rotatable, wherein its rotation axis is inclined relative to the vertical line, allowing the strawberries (2) to accumulate in the lowest part of the receiving hopper (1).

The metering plate (3) comprises cavities (4) which accommodate each one of the strawberries (2), cavities (4) which separate each strawberry (2) from the rest.

The receiving hopper (1) for further comprises transfer means (5) to which move each strawberry (2) from the cavity (4) of the metering plate (3) to one of the movable receiving cradles (10) through an opening (14) in the receiving hopper (1), wherein these transfer means (5) are adjacent to this opening in the receiving hopper (1).

The metering plate (3) further comprises circumferential grooves (20) that prevent the interference of said metering plate (3) which is integral with the receiving hopper (1), with the transfer means (5) that are fixed. The metering plate (3) further comprises a disk (41) arranged in the lower part thereof which prevents the strawberry (2) from rubbing against the bottom of the receiving hopper (1) and thus avoiding its damage.

The receiving hopper (1) further comprises locking means (8) which withdraw the strawberries (2) from over the cavity (4) of the metering plate which will be facing the transfer means (5). The locking means (8) comprise a rotary brush which is drivable by a motor (9).

Each movable receiving cradle (10) comprises two positioning rollers (11) which collect a strawberry (2) from the receiving hopper (1) due to the strawberry (2) displacement by means of the transfer means (5) and wherein the two positioning rollers (11) rotate around their axes in the same direction to position the strawberry (2) in a pre-calyx (12) cutting position which will be described later on.

The cutting machine further comprises movable hoppers (13) arranged on the positioning rollers (11) of the movable receiving cradles (10) when the latter are facing the opening (14) of the receiving hopper (1). These movable hoppers (13) prevent the displacement of the strawberry (2) outside the volume arranged above the positioning rollers (11).

The positioning rollers (11) comprises a generatrix (15) defining the surface thereof (11) when said generatrix (15) is rotated around a longitudinal axis (16) of the positioning rollers (11), wherein the generatrix (15) comprises a concave area (17). This concave area (17) allows the positioning of the central part of the strawberry (2) on said area during the rotation of the positioning rollers (11). The generatrix (15) further comprises two straight areas, a first straight area (18) of larger radius and a second area (19) of smaller radius which are disposed on both sides of the concave area (17). This first area (18) and second area (19) define contact edges (70) preventing the displacement of the strawberry (2) in the longitudinal direction of the positioning rollers (11) once the central part of the strawberry (1) is arranged between the concave areas (17) facing both positioning rollers (11), defining a pre-calyx (12) cutting position.

Each receiving cradle (10) further comprises two movable folding paddles (21) disposed on each one of the positioning rollers (11) to position the strawberry (2) within the movable receiving cradle (10) in pre- calyx (12) cutting position. These folding paddles (21) comprise some first sheaves (22) defining the open position of said folding paddles (21) due to the contact of the first sheaves (22) with a guiding surface (45) and some springs (23) implementing the elastic connection between the folding paddles (21) and the movable receiving cradles (10), wherein the spring shaft (23) coincides with the axis of rotation (46) of the folding paddles (21). This spring (23) allows the folding paddles (21) to come into contact with the strawberries (2) of any diameter in the closed position of said folding paddles (21) without damaging the strawberry (2) itself. This closed position occurs when the first sheaves (22) of the folding paddles (21) are no longer in contact with the guiding surface (45), so that by the restoring force of the spring (23), the paddles (21) rotate and come into contact with the strawberry (2) retaining it within the retaining cradle (10).

The strawberry cutting machine further comprises brushes (24) disposed below the displacement area of the movable receiving cradles (10) located below the area where the strawberries (2) are collected, so that the friction of said brushes (24) on the positioning rollers (11) causes the rotation thereof (11) in the area where the brushes (24) are disposed, an area which coincides with the open position of the folding paddles (21).

Once the transversal cutting of the strawberry (2) is completed, which will be described later, the folding paddles (21) return to their open position due to the contact made by some second sheaves (49) present in the folding paddles (21) with some projections (not shown) that return them to their open position which is maintained by the contact made by the first rollers (22) with the guiding surface (45).

The strawberry cutting machine further comprises displacement means which move the strawberries within the movable receiving cradles (10) from the pre-calyx (12) cutting position to the calyx (12) cutting position. These displacement means comprise movable pushers (25) in the longitudinal direction of the strawberry (2) in turn comprising a needle (86) in order to pierce the strawberry (2) when the movable pusher (25) thrusts forward preventing its transverse displacement. The movable pushers (25) further comprise a movable head (26) that pushes the strawberry (2) into the movable receiving cradle (10). This movable head (26) is shaped such that it can be inserted into the inside space of the movable receiving cradle (10) in order to move the strawberry (2) to the calyx (12) cutting position and subsequently removed when the folding paddles (21) are in their closed position. This movable head (26) is resiliently attached to the movable pusher (25) through a spring (28) to adapt the movable head (26) to the size of the strawberry (2). The movable pusher (25) has at its driving end a swivel joint (87) which absorbs the misalignment of the same when pushing the strawberry (2).

The strawberry cutting machine further comprises transversal cutting means which cut off the calyx (12) of the strawberry (2) arranged in each movable receiving cradle (10), wherein these transversal cutting means comprise rotating cutting discs (30) that cut off the calyx (12) of the strawberry (2) projecting from the receiving cradle (10) in the calyx (12) cutting position once said strawberry (2) has been pushed by the movable pushers (25) of the displacement means from the pre-calyx (12) cutting position to said calyx (12) cutting position, wherein said calyx (12) cutting position is defined by stops (27) which limit the advance of the strawberry (2) when it is pushed by the movable pushers (25).

Once the transversal cutting of the strawberry (2) is completed, and as described above, the folding paddles (21) return to their open position due to the contact by the second sheaves (49) present in the folding paddles (21) with the projections, whereby the strawberry without the calyx (12) drops by gravity from the movable receiving cradle (10) towards means for collecting the strawberries (2) without the calyces (12) comprising an evacuation hopper (31) for the strawberries without calyces (12) and a collection box (32) for said cut strawberries. Moreover, the machine comprises means for collecting the cut off calyces (12) comprising an evacuation hopper and a collection box (not shown).

In an alternative embodiment of the displacement means which move the strawberries within the movable receiving cradles (10) from the pre-calyx (12) cutting position to the calyx (12) cutting position, said displacement means comprise some longitudinal cutting means in order to cut the strawberry (2) into two halves along a longitudinal plane of the same instead of the needle (86) which pierces the strawberry (2) when the movable pusher (25) thrusts forward in another embodiment. These longitudinal cutting means comprise blades (29) arranged on the movable heads (26) of the movable pushers (25), which cut the strawberry (2) into two halves when the movable pusher (25) advances toward the movable receiving cradle (10). This will make subsequent tasks for the preparation of strawberry jam or compote easier.

The strawberry cutting machine further comprises a fixed camera (35) facing the first set (50) of movable receiving cradles (10) which obtains the position of each strawberry (2) in each movable receiving cradle (10) as it passes the position of the fixed camera (35), a control system that compares the image obtained for each strawberry (2) with a default image of the optimal position of a strawberry (2) within the receiving cradle (10) and which determines if the strawberry is properly placed, properly placed being when the strawberry has its longitudinal axis aligned with the rotation axis of the positioning rollers (11), if the strawberry (2) is suitably shaped, i.e. if is not deformed or if there is more than one strawberry (2) per receiving cradle (10).

The strawberry cutting machine further comprises ejection means to eject the strawberry (2) or strawberries (2) from the receiving cradle (10) if the control system detects that the strawberry (2) does not have its longitudinal axis aligned with the rotation axis of the positioning rollers (11), if the strawberry (2) is deformed or if there is more than one strawberry (2) in a receiving cradle (10). These ejection means comprise a blower (36) which ejects the strawberry (2) or strawberries (2) from the receiving cradle (10) towards a discharge nozzle (48) when the folding paddles (21) are in their open position.

The strawberry cutting machine further comprises strawberry (2) relocation means which act in case the fixed camera (35) detects that the strawberry (2) does not have its calyx (12) disposed on the side of the receiving cradle (10) adjacent to the transversal cutting means. These strawberry (2) relocation means comprise movable pushers (37) to move the strawberries (2) out of the movable receiving cradles (10) of the first set (50) and to deposit them in other movable receiving cradles (10) of a second set (60) of cradles arranged in parallel to the first set (50) before the folding paddles (21) of the moving receiving cradles (10) of this second set (50) close over the strawberry (2). These movable pushers (37) comprise a head (43) and a needle (44) in order to pierce the strawberry (2) when the movable pusher (37) thrusts forward preventing its transverse displacement. The movement of these relocation means is driven by a set of flat cams.

Preferably, the movable receiving cradles (10) of the second set (60) have a configuration being symmetrical to the movable receiving cradles (10) of the first set (50) with respect to a vertical plane disposed between the two sets (50, 60), but they present an offset with respect to the movable receiving cradles (10) of the first set (50) to compensate for the time the strawberry (2) takes to move from a movable receiving cradle (10) of the first set (50) to a movable receiving cradle (10) of the second set (50).

Between both sets of cradles (50, 60) the strawberry cutting machine comprises intermediate securing means (42) which supports the strawberry (2) when passing from the first set (50) to the second set (60) during the thrusting carried out by the movable pusher (37) of the relocation means.

The machine further comprises displacement means which move the strawberries within the movable receiving cradles (10) of the second set (60) from the pre-calyx (12) cutting position to the calyx (12) cutting position, displacement means being the same as those described for the first set (50) of movable cradles (10), stops for this second set (60) being the same as those described for the first set (50) and transversal cutting means for the second set (60) being the same as those described for the first set.

In this preferred embodiment the strawberry cutting machine can reach a cutting speed of 3 strawberries/second.

## Claims

1. Strawberry cutting machine comprising a receiving hopper (1) for whole strawberries (2) and transversal cutting means that cut off the calyx (12) of the strawberry (2) in a calyx (12) cutting position **characterized in that** further comprises:
• a first set (50) of receiving cradles (10), wherein each receiving cradle (10) is configured to receive one strawberry (2) and comprises:
o two positioning rollers (11), wherein at least one of the two positioning rollers (11) is rotatable around its axis to position the strawberry (2) in a pre-calyx (12) cutting position or in a calyx (12) cutting position, and
o at least one folding paddle (21) which fixes the position of the strawberry (2) within the receiving cradle (10) in the pre-calyx (12) cutting position or in the calyx (12) cutting position.

2. Strawberry cutting machine according to claim 1 **characterized in that** it further comprises:
• displacement means to move the strawberries (2) within the receiving cradles (10) from the pre-calyx (12) cutting position to the calyx (12) cutting position wherein the calyx (12) protrudes from the receiving cradle (10).

3. Strawberry cutting machine according to any of the preceding claims **characterized in that** the positioning rollers (11) comprise a generatrix (15) comprising at least one concave area (17).

4. Strawberry cutting machine according to any of the preceding claims **characterized in that** the folding paddles (21) comprise some first sheaves (22) which determine:
• an open position of said folding paddles (21) due to the contact made by the first sheaves (22) with a guiding surface (45) and some springs (23) resiliently connecting the folding paddles (21) and the receiving cradles (10), and
• a closed position of said folding paddles (21) determined by the contact made by the folding paddles (21) with the strawberry (2) due to the restoring force of the spring (23) when the first sheaves (22) of the folding paddles (21) are no longer in contact with the guiding surface (45).

5. Strawberry cutting machine according to any of claims 2 to 4 **characterized in that** the displacement means comprise some movable pushers (25) in the longitudinal direction of the strawberry (2) in turn comprising a movable head (26) resiliently attached to the movable pusher (25) through a spring (28) to adapt the movable head (26) to the size of the strawberry (2).

6. Strawberry cutting machine according to claim 5 **characterized in that** the movable pushers (25) further comprise a needle (86) to pierce the strawberry (2) when the movable pusher (25) thrusts forward.

7. Strawberry cutting machine according to claim 5 **characterized in that** the displacement means comprise longitudinal cutting means to cut the strawberry (2) into two halves along a longitudinal plane of the strawberry (2).

8. Strawberry cutting machine according to any of the preceding claims **characterized in that** the cradles of the first set (50) of receiving cradles (10) are movable and the machine further comprises a fixed camera (35) facing the first set (50) of movable receiving cradles (10) which obtains the position of each strawberry (2) in each movable receiving cradle (10) as it passes the position of the said fixed camera (35) and a control system that compares the image obtained for each strawberry (2) with a default image of the optimal position of a strawberry (2) inside the receiving cradle (10).

9. Strawberry cutting machine according to claim 8 **characterized in that** it comprises means of ejection (36) which eject the strawberry (2) or strawberries (2) from the receiving cradle (10) in case the control system detects that the strawberry (2) does not have its longitudinal axis aligned with the rotation axis of the positioning rollers (11), if the strawberry (2) is deformed or if there is more than one strawberry (2) per receiving cradle (10).

10. Strawberry cutting machine according to claim 8 **characterized in that** it comprises strawberry (2) relocation means comprising movable pushers (37) to move the strawberries (2) out of the movable receiving cradles (10) of the first set (50) and deposit them in other movable receiving cradles (10) of a second set (60) of cradles arranged parallel to the first set (50).

11. Strawberry cutting machine according to claim 10 **characterized in that** the movable pushers (37) comprise a head (43) and a needle (44) which pierces the strawberry (2) when the movable pusher (37) thrusts forward.

12. Strawberry cutting machine according to claim 11 **characterized in that** the movable receiving cradles (10) of the second set (60) have a configuration being symmetrical to the movable receiving cradles (10) of the first set (50) with respect to a vertical plane disposed between the two sets (50, 60).

13. Strawberry cutting machine according to claim 12 **characterized in that** the movable receiving cradles (10) of the second set (60) present an offset with regard to the movable receiving cradles (10) of the first set (50).

14. Strawberry cutting machine according to claim 12 **characterized in that** the receiving hopper (1) is rotatable and comprises:
• a metering plate (3) comprising cavities (4) which house each one of the strawberries (2), and
• transfer means (5) to move each strawberry (2) from the cavity (4) of the metering plate (3) to one of the receiving cradles (10) through an opening (14) present in the receiving hopper (1), wherein these transfer means
(5) are adjacent to this opening in the receiving hopper (1), wherein the metering plate (3) further comprises circumferential grooves (20) that prevent interference of said metering plate (3) which is integral with the receiving hopper (1), with the transfer means (5) which are fixed.

15. Strawberry cutting machine according to claim 12 **characterized in that** the receiving hopper (1) further comprises locking means (8) which withdraw the strawberries (2) from over the cavity (4) of the metering plate (3) which faces the transfer means (5).

## Patentansprüche

1. Maschine zum Schneiden von Erdbeeren, die einen Aufnahmetrichter (1) für ganze Erdbeeren (2) und querschneidende Mittel umfasst, die den Kelch (12) der Erdbeere (2) in einer Kelch-(12)-Schneidposition abschneiden, **dadurch gekennzeichnet, dass** sie weiterhin
- eine erste Gruppe (50) von Aufnahmekörben (10) umfasst, wobei jeder Aufnahmekorb (10) zur Aufnahme einer Erdbeere (2) ausgebildet ist und
• zwei Positionierwalzen (11), wobei mindestens eine der beiden Positionierwalzen (11) um deren Achse drehbar ist, um die Erdbeere (2) in eine Vor-Kelch-(12)-Schneidposition oder in eine Kelch-(12)-Schneidposition zu bringen, und
• mindestens eine Faltschaufel (21), die die Position der Erdbeere (2) innerhalb des Aufnahmekorbs (10) in der Vor-Kelch-(12)-Schneidposition oder in der Kelch-(12)-Schneidposition festlegt, umfasst.

2. Maschine zum Schneiden von Erdbeeren nach Anspruch 1, **dadurch gekennzeichnet, dass** sie weiterhin umfasst:
- Verschiebemittel zum Überführen der Erdbeeren (2) innerhalb der Aufnahmekörbe (10) von der Vor-Kelch-(12)-Schneidposition in die Kelch-(12)-Schneidposition, wobei der Kelch (12) aus dem Aufnahmekorb (10) herausragt.

3. Maschine zum Schneiden von Erdbeeren nach einem der vorhergehenden Ansprüche, **dadurch gekennzeichnet, dass** die Positionierwalzen (11) eine Mantellinie (15) umfassen, die mindestens einen konkaven Bereich (17) umfasst.

4. Maschine zum Schneiden von Erdbeeren nach einem der vorhergehenden Ansprüche, **dadurch gekennzeichnet, dass** die Faltschaufeln (21) einige erste Laufrollen (22) umfassen, die
- eine geöffnete Position der besagten Faltschaufeln (21), bedingt durch die Berührung der ersten Laufrollen (22) mit einer Führungsfläche (45) und einigen Federn (23), die die Faltschaufeln (21) und die Aufnahmekörbe (10) elastisch miteinander verbinden, und
- eine geschlossene Position der besagten Faltschaufeln (21), bestimmt durch die Berührung der Faltschaufeln (21) mit der Erdbeere (2) und bedingt durch die Rückstellkraft der Feder (23), wenn die ersten Laufrollen (22) der Faltschaufeln (21) die Führungsfläche (45) nicht mehr berühren,
bestimmen.

5. Maschine zum Schneiden von Erdbeeren nach einem der Ansprüche 2 bis 4, **dadurch gekennzeichnet, dass** die Verschiebemittel in Längsrichtung der Erdbeere (2) einige bewegliche Schieber (25) umfassen, die wiederum einen beweglichen Kopf (26) umfassen, der über eine Feder (28) elastisch mit dem beweglichen Schieber (25) verbunden ist, um den beweglichen Kopf (26) an die Größe der Erdbeere (2) anzupassen.

6. Maschine zum Schneiden von Erdbeeren nach Anspruch 5, **dadurch gekennzeichnet, dass** die beweglichen Schieber (25) weiterhin eine Nadel (86) umfassen, die die Erdbeere (2) beim Vorschieben des beweglichen Schiebers (25) durchsticht.

7. Maschine zum Schneiden von Erdbeeren nach Anspruch 5, **dadurch gekennzeichnet, dass** die Verschiebemittel längsschneidende Mittel umfassen, um die Erdbeere (2) entlang einer Längsebene der Erdbeere (2) in zwei Hälften zu schneiden.

8. Maschine zum Schneiden von Erdbeeren nach einem der vorhergehenden Ansprüche, **dadurch gekennzeichnet, dass** die Körbe der ersten Gruppe (50) von Aufnahmekörben (10) beweglich sind und dass die Maschine weiterhin eine feststehende Kamera (35) umfasst, die der ersten Gruppe (50) von beweglichen Aufnahmekörben (10) zugewandt ist und die Position jeder Erdbeere (2) in jedem beweglichen Aufnahmekorb (10) beim Passieren der Position der besagten feststehenden Kamera (35) aufnimmt, und ein Kontrollsystem, das das für jede Erdbeere (2) erhaltene Bild mit einem Standardbild einer Erdbeere (2) in optimaler Position innerhalb des Aufnahmekorbs (10) vergleicht.

9. Maschine zum Schneiden von Erdbeeren nach Anspruch 8, **dadurch gekennzeichnet, dass** sie Ausstoßmittel (36) umfasst, die die Erdbeere (2) oder Erdbeeren (2) aus dem Aufnahmekorb (10) ausstoßen, falls das Kontrollsystem feststellt, dass die Längsachse der Erdbeere (2) nicht an der Drehachse der Positionierwalzen (11) ausgerichtet, die Erdbeere (2) verformt oder mehr als eine Erdbeere (2) pro Aufnahmekorb (10) vorhanden ist.

10. Maschine zum Schneiden von Erdbeeren nach Anspruch 8, **dadurch gekennzeichnet, dass** sie Verlagerungsmittel für Erdbeeren (2) umfasst, die bewegliche Schieber (37) umfassen, um die Erdbeeren (2) aus den beweglichen Aufnahmekörben (10) der ersten Gruppe (50) zu entnehmen und in andere bewegliche Aufnahmekörbe (10) einer parallel zur ersten Gruppe angeordneten zweiten Gruppe (60) von Körben zu legen.

11. Maschine zum Schneiden von Erdbeeren nach Anspruch 10, **dadurch gekennzeichnet, dass** die beweglichen Schieber (37) einen Kopf (43) und eine Nadel (44), die die Erdbeere (2) beim Vorschieben des beweglichen Schiebers (37) durchsticht, umfassen.

12. Maschine zum Schneiden von Erdbeeren nach Anspruch 11, **dadurch gekennzeichnet, dass** die beweglichen Aufnahmekörbe (10) der zweiten Gruppe (60) so ausgebildet sind, dass sie in Bezug auf eine zwischen den beiden Gruppen (50, 60) liegende senkrechte Ebene symmetrisch zu den beweglichen Aufnahmekörben (10) der ersten Gruppe (50) angeordnet sind.

13. Maschine zum Schneiden von Erdbeeren nach Anspruch 12, **dadurch gekennzeichnet, dass** die beweglichen Aufnahmekörbe (10) der zweiten Gruppe (60) relativ zu den beweglichen Aufnahmekörben (10) der ersten Gruppe (50) versetzt sind.

14. Maschine zum Schneiden von Erdbeeren nach Anspruch 12, **dadurch gekennzeichnet, dass** der Aufnahmetrichter (1) drehbar ist und Folgendes umfasst:
- eine Zumessplatte (3), die Vertiefungen (4) umfasst, die jede einzelne Erdbeere (2) aufnehmen, und
- Übergabemittel (5) zum Überführen jeder Erdbeere (2) von der Vertiefung (4) der Zumessplatte (3) in einen der Aufnahmekörbe (10) über eine im Aufnahmetrichter (1) vorliegende Öffnung (14), wobei diese Übergabemittel (5) an diese Öffnung im Aufnahmetrichter (1) angrenzen,
wobei die Zumessplatte (3) weiterhin umlaufende Rillen (20) umfasst, die verhindern, dass sich die besagte Zumessplatte (3), die integraler Bestandteil des Aufnahmetrichters (1) ist, und die befestigten Übergabemittel (5) gegenseitig behindern.

15. Maschine zum Schneiden von Erdbeeren nach Anspruch 12, **dadurch gekennzeichnet, dass** der Aufnahmetrichter (1) weiterhin Verriegelungsmittel (8) umfasst, die die Erdbeeren (2) von oberhalb der Vertiefung (4) der den Übergabemitteln (5) zugewandten Zumessplatte (3) aussondern.

## Revendications

1. Machine à couper les fraises comprenant une trémie de réception (1) pour l'ensemble des fraises (2) et des moyens de coupe transversale qui coupent le calice (12) de la fraise (2) en position de coupe du calice (12), **caractérisée en ce qu'**elle comprend en outre :
- un premier jeu (50) de paniers de réception (10), dans lequel chaque panier de réception (10) est configuré pour recevoir une fraise (2) et comprend :
• deux rouleaux de positionnement (11), où au moins l'un des deux rouleaux de positionnement (11) peut tourner autour de son axe pour positionner la fraise (2) en pré-position de coupe du calice (12) ou en position de coupe du calice (12), et
• au moins une spatule dépliable (21) qui fixe la position de la fraise (2) à l'intérieur du panier de réception (10) en pré-position de coupe du calice (12) ou en position de coupe du calice (12).

2. Machine à couper les fraises selon la revendication 1, **caractérisée en ce qu'**elle comprend en outre :
- des moyens de déplacement pour déplacer les fraises (2) à l'intérieur des paniers de réception (10) depuis la pré-position de coupe du calice (12) jusqu'à la position de coupe du calice (12) où le calice (12) dépasse du panier de réception (10).

3. Machine à couper les fraises selon n'importe laquelle des revendications précédentes, **caractérisée en ce que** les rouleaux de positionnement (11) comprennent une génératrice (15) comportant au moins une zone concave (17).

4. Machine à couper les fraises selon n'importe laquelle des revendications précédentes, **caractérisée en ce que** les spatules dépliables (21) comprennent plusieurs premières poulies (22) qui déterminent :
- une position ouverte desdites spatules dépliables (21) due au contact établi par les premières poulies (22) avec une surface de guidage (45) et des ressorts (23) connectant élastiquement les spatules dépliables (21) et les paniers de réception (10), et
- une position fermée desdites spatules dépliables (21) déterminée par le contact établi par les spatules dépliables (21) avec la fraise (2) provoqué par la force de rétablissement du ressort (23) lorsque les premières poulies (22) des spatules dépliables (21) ne sont plus en contact avec la surface de guidage (45).

5. Machine à couper les fraises selon n'importe laquelle des revendications 2 à 4, **caractérisée en ce que** les moyens de déplacement comprennent des poussoirs mobiles (25) dans le sens longitudinal de la fraise (2) comprenant à leur tour une tête mobile (26) élastiquement attachée au poussoir mobile (25) par un ressort (28) pour adapter la tête mobile (26) à la taille de la fraise (2).

6. Machine à couper les fraises selon la revendication 5, **caractérisée en ce que** les poussoirs mobiles (25) comprennent en outre une aiguille (86) pour percer la fraise (2) lorsque le poussoir mobile (25) pousse vers l'avant.

7. Machine à couper les fraises selon la revendication 5, **caractérisée en ce que** les moyens de déplacement comprennent des moyens de coupe longitudinale pour couper la fraise (2) en deux moitiés le long d'un plan longitudinal de la fraise (2).

8. Machine à couper les fraises selon n'importe laquelle des revendications précédentes, **caractérisée en ce que** les paniers du premier jeu (50) de paniers de réception (10) sont mobiles et **en ce que** la machine comprend en outre une caméra fixe (35) faisant face au premier jeu (50) de paniers de réception mobiles (10) qui obtient la position de chaque fraise (2) dans chaque panier de réception mobile (10) lorsqu'il passe devant l'emplacement de ladite caméra fixe (35) et **en ce qu'**un système de contrôle qui compare l'image obtenue pour chaque fraise (2) à une image par défaut de la position optimale d'une fraise (2) à l'intérieur du panier de réception (10).

9. Machine à couper les fraises selon la revendication 8, **caractérisée en ce qu'**elle comprend des moyens d'éjection (36) qui éjectent la fraise (2) ou les fraises (2) du panier de réception (10) si le système de contrôle détecte que l'axe longitudinal de la fraise (2) n'est pas aligné avec l'axe de rotation des rouleaux de positionnement (11), si la fraise (2) est déformée ou s'il y a plus d'une fraise (2) par panier de réception (10).

10. Machine à couper les fraises selon la revendication 8, **caractérisée en ce qu'**elle comprend des moyens de déplacement des fraises (2) comportant des poussoirs mobiles (37) pour déplacer les fraises (2) en dehors des paniers de réception mobiles (10) du premier jeu (50) et les déposer dans d'autres paniers de réception mobiles (10) d'un second jeu (60) de paniers disposé parallèlement au premier jeu (50).

11. Machine à couper les fraises selon la revendication 10, **caractérisée en ce que** les poussoirs mobiles (37) comprennent une tête (43) et une aiguille (44) qui perce la fraise (2) lorsque le poussoir mobile (37) pousse vers l'avant.

12. Machine à couper les fraises selon la revendication 11, **caractérisée en ce que** les paniers de réception mobiles (10) du second jeu (60) ont une configuration symétrique à celle des paniers de réception mobiles (10) du premier jeu (50) par rapport à un plan vertical disposé entre les deux jeux (50, 60).

13. Machine à couper les fraises selon la revendication 12, **caractérisée en ce que** les paniers de réception mobiles (10) du second jeu (60) présentent un décalage par rapport aux paniers de réception mobiles (10) du premier jeu (50).

14. Machine à couper les fraises selon la revendication 12, **caractérisée en ce que** la trémie de réception (1) est rotative et comprend :
- une plaque de comptage (3) comportant des cavités (4) qui hébergent chacune des fraises (2), et
- des moyens de transfert (5) pour déplacer chaque fraise (2) depuis la cavité (4) de la plaque de comptage (3) jusqu'à l'un des paniers de réception (10) via une ouverture (14) présente dans la trémie de réception (1), dans laquelle ces moyens de transfert (5) sont adjacents à cette ouverture présente dans la trémie de réception (1), dans laquelle la plaque de comptage (3) comprend en outre des rainures circonférentielles (20) qui empêchent l'interférence de ladite plaque de comptage (3) qui fait partie intégrante de la trémie de réception (1), avec les moyens de transfert (5) qui sont fixes.

15. Machine à couper les fraises selon la revendication 12, **caractérisée en ce que** la trémie de réception (1) comprend en outre des moyens de blocage (8) qui retirent les fraises (2) du dessus de la cavité (4) de la plaque de comptage (3) qui fait face aux moyens de transfert (5).
